Europäisches Patentamt

European Patent Office

Office européen des brevets

(19)

(11) Publication number: **0 017 086**
**B1**

(12) # EUROPEAN PATENT SPECIFICATION

(45) Date of publication of patent specification: **24.08.83**

(21) Application number: **80101440.8**

(22) Date of filing: **19.03.80**

(51) Int. Cl.³: **C 08 J 9/20, B 32 B 27/08,
B 32 B 27/30, B 32 B 27/32**

(54) Expandable thermoplastic polymer beads and process for their production.

(30) Priority: **19.03.79 JP 32680/79**

(43) Date of publication of application:
**15.10.80 Bulletin 80/21**

(45) Publication of the grant of the patent:
**24.08.83 Bulletin 83/34**

(84) Designated Contracting States:
**BE DE FR GB**

(56) References cited:
**DE - A - 1 694 094
DE - A - 2 755 005
DE - B - 2 525 173
US - A - 3 743 611**

(73) Proprietor: **KANEGAFUCHI KAGAKU KOGYO
KABUSHIKI KAISHA
2-4 Nakanoshima 3-chome
Kita-ku Osaka-shi (JP)**

(72) Inventor: **Senda, Kenichi
17-8095, 1-Ban, Miyanoue
Akashi-shi Hyogo-ken (JP)**
Inventor: **Nishida, Tatehiko
269-14, Tai Aboshi-ku
Himeji-shi Hyogo-ken (JP)**
Inventor: **Nakagawa, Masao
442-21, Sone-cho
Takasago-shi Hyogo-ken (JP)**

(74) Representative: **Vossius-Vossius-Tauchner-
Heunemann-Rauh Patentanwälte
P.O.Box 860767 Siebertstrasse 4
D-8000 München 86 (DE)**

Expandable thermoplastic polymer beads and process for their production

The present invention relates to expandable thermoplastic polymer beads which hardly lose any of a foaming agent absorbed within their expandable form and maintain satisfactory elasticity and rigidity; the novel polymer beads are useful for the production of foamed shaped articles, wherein the polymer beads are preliminarily foamed (prefoamed) with heat and the prefoamed beads are then packed into a suitable metal mould to give a product of the desired shape upon further heating. The present invention further concerns the production of expandable thermoplastic polymer beads having a core composed of vinyl polymer grains and a skin of an olefin polymer covering the grains.

Up to the present day a few types of expandable polymer beads have already been produced on a commercial scale by adding a styrene-based monomer to a polyethylene-based resin in an aqueous medium, polymerizing these together and then impregnating the product with a foaming agent. These modified beads certainly give expanded articles (popcorn plastics) superior in elasticity to comparable conventional foamed polystyrene and show a relatively high degree of expansion compared to the conventional foamed polyolefins. In other words, by comparison with pure polyethylene resin expandable polymer beads of these types can easily absorb a foaming agent and give rise to a relatively highly expanded pre-foam. However, being prone to lose foaming agent, the beads must first be pre-foamed within a short time after absorbing foaming agent and then dispatched to the manufacturers of foamed articles.

Thermofoamable thermoplastic beads consisting of an aliphatic olefin polymer, a foaming agent and an organic material for enhancing preservation of the foaming agent within said beads are described in US—A—3 743 611. The said organic material may be another thermoplastic resin having an affinity to said foaming agent, a solvent for the resin above room temperature or a copolymerizable vinyl monomer and mixtures thereof.

The thermoplastic beads according to US—A—3 743 611 contain the aliphatic olefin polymer as basic component. The organic material for enhancing preservation of the foaming agent (which may be a vinyl polymer) is simply mixed with the olefin polymer without any specific form or distribution of one component or the other. However, since the olefin polymer (e.g. polyethylene) is little compatible with the vinyl polymer (e.g. polystyrene), phase separation occurs easily in the microstructure. The vinyl polymer which is to serve as foaming agent preserving medium is not comprised in the beads according to US—A—3 743 611 in the form of one large grain but in the form of small particles having a large surface area. Therefore, easy evaporation of the foaming agent takes place in the beads according to US—A—3 743 611.

Under these circumstances, the present inventors have investigated ways to eliminate the foregoing drawbacks in these types of products by improving their foaming agent retention capacity. As a result, the present inventors have created the expandable thermoplastic polymer beads of the invention, which can readily be prefoamed by the manufacturers of foamed articles and which additionally have satisfactory elasticity and strength, as well as excellent mouldability. The invention was finally made complete by the discovery that the ideal product can be obtained if grains of a vinyl polymer are covered or coated with a polyolefin resin (olefin polymer), thereby causing the coated vinyl polymer to retain a foaming agent and imparting the necessary elasticity through the polyolefin outer layer (skin). This invention, therefore, relates to novel expandable thermoplastic polymer beads consisting of composite beads having a core and a skin and containing a foaming agent; the core being composed of a polymer formed from one or more vinyl monomers; the skin being composed of an olefin polymer containing some or all of said vinyl monomers; and the foaming agent being a gas or a liquid at ordinary temperature and pressure and having a boiling point lower than the softening point of the core material.

The vinyl polymer used in this invention denotes a polymer composed chiefly of styrene and/or methyl methacrylate units. These polymers are superior in their capacity for retaining a foaming agent, as well as in their foamability and further advantageous physical properties. The vinyl polymer which constitutes the core of the expandable thermoplastic polymer beads consists of a polymer or polymers made from monomers and containing from 60 to 100% by weight of styrene and/or methyl methacrylate and from 0 to 40% by weight of monomers other than styrene and/or methyl methacrylate, such as acrylonitrile vinyl acetate or mixtures thereof. When the content of styrene and/or methyl methacrylate is less than 60% by weight, the resulting polymer does not have a sufficient foaming agent retention capacity or the physical properties required in the expanded moulding.

The olefin polymer used in this invention is preferably polyethylene, an ethylene-vinyl acetate copolymer, an ethylene-methyl methacrylate copolymer, an ethylene-vinylchloride copolymer, 1,2-polybutadiene or similar; these may be used either singly or in combination with each other.

The vinyl monomer contained in the olefin polymer, i.e. in the skin of the expandable thermoplastic polymer beads of this invention, is limited to those vinyl monomers which can be absorbed into the olefin polymer. Once it has been absorbed into the olefin polymer, the vinyl monomer serves not only to lower the melt viscosity of the olefin polymer to make the coating of the vinyl polymer easy but also improve the strength of the skin when properly incorporated. The vinyl monomer content in the olefin polymer is 5 to 50% by weight, and preferably 10 to 30% by weight. When the vinyl monomer content is less than 5% by weight, the effect and functioning are inferior; conversely, when the content is more than 50% by weight, the skin formed from the polyolefin becomes too hard and brittle.

The vinyl polymer formed from the monomer absorbed into the polyolefin is preferably composed chiefly of polystyrene; however, a small amount of polymethyl methacrylate polyacrylonitrile, polyvinyl acetate or similar may be mixed with the polystyrene.

It is necessary that the weight ratio of the core to the skin be in the range of from 95:5 to 30:70. When the weight ratio of core to skin exceeds 95:5, the polyolefin can no longer be expected to have the desired effect.

By contrast, when the weight ratio is below 30:70, the foaming capacity to produce satisfactory expansion becomes too low to allow practical application of the beads.

The foaming agent used in this invention should generally not dissolve the vinyl polymer, or at least not swell it excessively. The foaming agent must be gaseous or liquid at room temperature and atmospheric pressure. Thus lower aliphatic hydrocarbons can be used as foaming agents. In this case the foaming agent is chiefly composed of such lower aliphatic hydrocarbons as propane, butane, or pentane, and the balance of the composition may be replaced by hexane, heptane or cyclohexane.

In the second place, this invention pertains to a novel process for the production of expandable thermoplastic polymer beads, which process comprises suspending grains of a vinyl polymer, a powdered olefin polymer, one or more vinyl monomers and a cross-linking agent in an aqueous medium containing a dispersion agent, and polymerizing the vinyl monomers in the presence of an initiator. A foaming agent may be added to the dispersion mixture during or after polymerization, or beads or grains of the vinyl polymer containing the foaming agent can be used as starting material.

The vinyl monomers other than the primary monomer (the primary monomer is the monomer which constitutes the grains or beads) preferably have good solubility for the grains of a polymer and poor solubility for the olefin polymer. In other words, when the primary vinyl monomer is styrene, methyl methacrylate, acrylonitrile or vinyl acetate can be used. However, the olefin polymer will also satisfactorily cover the polystyrene core if styrene alone is used. By the use of the vinyl monomers other than the primary one (styrene), however, the stability of the suspension mixture will be improved; moreover, inasmuch as these vinyl monomers are well grafted on or blended with the vinyl polymer (polystyrene), they can help to control the mechanical properties of the core polymer.

The grains of the core polymer used have a size of 300 to 5000 micron ($\mu$) in the case of polystyrene. This particle size can also be used in the case of the other polymers.

Given that the symbol A is the weight of grains of the vinyl polymer, B the weight of the powdered olefin polymer, and C the weight of one or a mixture of more than one type of vinyl monomer, the weight ratio of (A+B) to C is in the range of from 90:10 to 30:70. When the ratio of (A+B):C is greater than 90:10, the polyolefin coat on the vinyl polymer becomes inadequate. Conversely, when the ratio is smaller than 30:70, the suspension of the solution mixture becomes unstable. Moreover, the proportion of A to B must be so determined that the proportion of the core to the skin lies in the range of from 95:5 to 30:70 in weight.

In view of the fact that the exact distribution of the vinyl monomers (their weight is C) between the vinyl polymer (its weight is A) and the olefin polymer (its weight is B) cannot be accurately forecast, the final proportion of A:B cannot be exactly fixed without considering C When the weight of the vinyl monomers (C) is small, the proportion A:B can be set at a value within the range of 95:5 to 30:70. When the value of C is large, however, in order to adjust the ratio of the core to the skin at a value between 95:5 and 30:70, the proportion A:B will have to be determined as appropriate by a simple preliminary experiment.

As dispersing agent in the process of this invention, water-soluble polymers such as polyvinyl alcohol or methyl cellulose, and inorganic compounds which are hardly soluble in water such as calcium phosphate or magnesium pyrophosphate are suitable.

In the present process, given the necessity that the beads of the vinyl polymer adhere to and be covered by the powdered olefin polymer, the affinity of the two polymers and their combined effect on the melt viscosity become important in a consideration of the covering efficiency in relation to the beads. As the polyolefin resin of which the skin is composed is impregnated with the vinyl monomer, the melt viscosity of the polyolefin resin is lowered and the core is easily covered with melted polyolefin resin. From this standpoint the ethylene-vinyl acetate copolymer with a vinyl acetate content of 15 to 50% by weight and a melt index of 1 to 100 gives excellent results as regards the covering efficiency and mechanical property of the foamed articles. In this case, the powdered ethylene-vinyl acetate copolymer should preferably have a particle size of from 10

to 2000 $\mu$, and this particle size can equally be applied to the other polyolefins.

In the present invention the covering efficiency can greatly be improved when the grains of the vinyl polymer are impregnated with the foaming agent. In this case the reaction of the dispersion mixture needs to be carried out under pressure using either an inert gas like nitrogen or the foaming agent itself, as mentioned earlier.

In order to polymerize one or more types of the vinyl monomers added to the reaction system, the conventionally used initiators for the suspension polymerization are suitable. Typical examples of these initiators are organic peroxides such as benzoyl peroxide, lauroyl peroxide, 1,1 - bis(tert - butyl peroxy)3,3,5 - trimethyl cyclohexane, and similar, azo compounds such as azobisisobutyronitrile and azobisdimethyl valeronitrile.

In the process of this invention, moreover, a cross-linking agent is employed to cross-link the vinyl polymers and the olefin polymers. Such cross-linking agents include bifunctional monomers like divinyl benzene and similar, and organic peroxides like di-tert-butyl peroxide, dicumyl peroxide and similar. By the use of the cross-linking agent the polymer beads are prevented from shrinking, which might otherwise occur in the course of the pre-foaming and moulding or shaping process.

The expandable thermoplastic polymer beads of the present invention generally have a spherical or an ellipsoidal form; however, slight deformation does not affect their practical application. They have a size of 400 to 8000 $\mu$; therefore any conventional moulding apparatus utilizing polystyrene beads can be used without the need to make any modification. The core of the vinyl polymer is well suited to hold the foaming agent, i.e. when the core is made from polystyrene, the core retains the foaming agent as firmly as the polystyrene itself; such affinity of the polystyrene core with the foaming agent can be said to be much greater than that of the conventional binary polyethylene-polystyrene beads with the foaming agent. Consequently, the expandable thermoplastic polymer beads can stand long storage periods, thus enabling the bead manufacturers to send the beads of the invention to the manufacturers of foamed articles without pre-foaming, which the bead producers were hitherto obliged to do in the case of conventional binary polyethylene polystyrene cored products. As a result, the costs of transportation can be much reduced, thus producing a saving which should be of great significance to industry.

The foamed shaped articles produced from the expandable thermoplastic polymer beads of this invention excel in strength and elasticity on account of the fact that every interface of the foamed beads is coated with a tenacious olefin polymer layer in which no cellular structure is present. Thanks to this, the foamed shaped articles have the improved strength and the elasticity resulting from the double structure, and by which means shortcomings inherent in each of the polymers are overcome; the conventional polyethylene polystyrene foamed shaped articles, on the other hand, are only designed to yield the intermediate properties of polyethylene and polystyrene.

The present invention described so far in general terms will be explained in more detail through the following examples.

Example 1

An aqueous dispersion was prepared by adding 10.5 g of tertiary calcium phosphate (3.5 parts by weight) as a dispersing agent and 0.126 g of a sodium alkyl (or alkene) sulphonate (0.042 part by weight) to 1500 g of pure water in a 3-litre autoclave. In the aqueous dispersion were suspended 300 g of a powdered ethylene-vinyl acetate copolymer having a melt index of 3 and a content of 25% vinyl acetate units (100 parts by weight) ("FLO-VAC K-2010", particle size 149—710 $\mu$) and 450 g of polystyrene beads (150 parts by weight, particle size 840—1410 $\mu$) containing 7% by weight of butane as a foaming agent. The mixture was agitated with a stirrer at 300 rpm. To the well dispersed suspension are added 150 g of methyl methacrylate (50 parts by weight) and 150 g of styrene containing 0.08 part by weight of divinyl benzene, 0.28 part by weght of benzoyl peroxide, and 0.15 part by weight of 1,1 - bis(tert - butyl peroxy)3,3,5 - tri - methyl cyclohexane (50 parts by weight). The polymerization was conducted as described below. Nitrogen was introduced into the autoclave at 15°C so that the internal pressure reached 9 kg/cm$^2$. Then the temperature in the autoclave was raised to 60°C for 1 hour, and finally to 90°C for 3 hours. Next the resulting product was heated at 105°C for 2 hours and subsequently cooled. When the temperature had fallen to 40°C the nitrogen was vented. 90 g of n-butane (30 parts by weight) were fed into the autoclave and the contents were heated to 105°C for 6 hours. After cooling the autoclave was opened and the product was removed and rinsed with water. The beads obtained had a spherical shape and contained 6.0% by weight of n-butane, and they proved to be coated uniformly with about 30% by weight of the ethylene-vinyl acetate copolymer. The beads were aged at 5°C for 24 hours before steam was applied to foam them; as a result, expansion of as much as 61 times the original volume was observed.

The beads pre-foamed by about 30 times were packed into a 20×25×10 cm frame and exposed for 20 seconds to super-heated steam having a pressure of 0.8 kg/cm$^2$. The resulting shaped article, in which the beads were found to be closely fused, had a density of 0.035 g/cm$^3$ and showed excellent strength and elasticity, as compared with conventional foamed polystyrene.

Separately, after being left to stand at room temperature (about 15°C) to investigate their capacity for retaining the foaming agent, the beads showed that the foaming agent had evaporated from the skin of the ethylene-vinyl acetate copolymer within two days, and the retention capacity was 82% in total, extending from the second to the fifteenth day. This figure clearly proves that there is substantially no difference in the foaming agent retention capacity of these binary beads and the polystyrene beads having a similar particle size, whose retention capacity is 89%. The beads which had been left for 10 days after the absorption of the foaming agent expanded up to 57 times their original volume when steam was applied.

Example 2

In 300 g of styrene (100 parts by weight) were dissolved divinyl benzene, benzoyl peroxide, and 1,1 - bis(tert - butyl peroxy)3,3,5 - trimethyl cyclohexane, in the same amounts as in Example 1. Methyl methacrylate was not used in Example 2. n-Butane was used in an amount of 180 g (60 parts by weight), which was as much as twice that of Example 1. The other conditions remained unchanged. The beads produced contained 6.8% by weight of n-butane and proved to have a slightly deformed spherical form. The beads were able to expand up to 57 times their initial volume when heated in the same way as described in Example 1. Two samples of shaped articles produced from the same beads which had been made to expand by about 30 times and about 40 times in the pre-foaming stage had a density of 0.032 g/cm$^3$ and 0.021 g/cm$^3$, respectively. In these samples the beads were found to be closely fused together. These samples were superior to the conventional foamed polystyrene in their elasticity and strength. The elasticity of these samples proved to be better than that of the samples in Example 1. The investigation into the foaming agent retention capacity (at 20°C) using the procedure described in Example 1 gave a result of 75% for the expandable beads of this invention and 86% for the conventional expandable polystyrene beads. After the beads had been left for 10 days after being impregnated with the foaming agent, they were able to expand up to 45 times their initial volume when subjected to heat.

Example 3

The production of the expandable thermoplastic polymer beads of this invention was carried out in the same way as stated in Example 1, except that methyl methacrylate was substituted for acrylonitrile. The beads produced had a spherical form and contained 6.3% by weight of n-butane. The ethylene-vinyl acetate copolymer was found to cover the core uniformly; however, in this case the beads looked somewhat yellowish because acrylonitrile had been used instead of methyl methacrylate. The beads expanded up to 64 times their original volume when they were subjected to steaming in the same way as described in Example 1. In a shaped article produced from beads made to expand 30 times in the prefoaming stage, the beads were seen to be fused together. The density of the shaped article was 0.032. The strength and the elasticity were both superior compared with the conventional foamed polystyrene; however, these results were slightly inferior to those obtained in Example 1.

The capacity for retaining the foaming agent, measured by the same method as described in Example 1, was 83%, whereas that of the conventional expandable polystyrene beads was 89%. After the beads had been left for 10 days after impregnation of the foaming agent, they showed expansion of up to 52 times their initial volume.

Example 4

Example 1 was repeated but instead of nitrogen gas, 60 g of n-butane (20 parts by weight) were introduced into the autoclave under pressure at room temperature. After standing at 60°C for 1 hour, the mixture was polymerized at 90°C for 3 hours. After polymerization had taken place, the temperature was raised to 105°C and stirring was continued for 2 hours. The product was then cooled and taken out of the autoclave and rinsed with water. The resulting beads contained 5.1% by weight of n-butane and had a spherical form. They expanded up to 58 times when they were subjected to the same steaming process as in Example 1.

**Claims**

1. composite expandable thermoplastic polymer beads comprising an olefin polymer, a vinyl polymer and a foaming agent which is gaseous or liquid at ordinary temperature and pressure, characterized in that the beads consist of a core and a skin, the weight ratio of the core to the skin being in the rage of from 95:5 to 30:70, the core being composed of 60 to 100% by weight of styrene and/or methyl methacrylate, the skin being composed of the olefin polymer which contains 5 to 50% by weight of the vinyl polymer, and in that the foaming agent has a boiling point below the softening point of the core material.

2. Polymer beads as claimed in claim 1, wherein the core contains 0 to 40% by weight of acrylonitrile, vinyl acetate or mixtures thereof.

3. Polymer beads as claimed in claim 1 or 2, wherein the olefin polymer which constitutes the skin is an ethylene-vinyl acetate copolymer.

4. Polymer beads as claimed in claim 3, wherein the ethylene-vinyl acetate copolymer contains 15 to 50% of vinyl acetate monomer units and has a melt index of 1 to 100.

5. Polymer beads as claimed in claims 1 to 4, wherein the vinyl polymer in the skin is polystyrene.

6. Process for the production of the polymer beads according to claim 1, which comprises suspending grains of a vinyl polymer, a powdered olefin polymer, one or more vinyl monomers capable of being absorbed into the olefin polymer and a cross-linking agent in an aqueous medium containing a dispersing agent in a ratio of A:B in the range of 95:5 to 30:70 and in a ratio of (A+B) to C in the range of 90:10 to 30:70, where A represents the weight of grains of the vinyl polymer, B the weight of a powdered olefin polymer, and C the weight of the one or more vinyl monomers, and polymerizing the vinyl monomers in the presence of an initiator, the foaming agent being added to the dispersion mixture during or after the polymerization, or beads of the vinyl polymer containing the foaming agent being used as starting material.

7. Process as claimed in claim 6, wherein grains of an expandable polystyrene previously impregnated with a foaming agent are used as starting material.

8. Process as claimed in claim 6 or 7, wherein one of the vinyl monomers is styrene and the other is selected from methyl methacrylate, acrylonitrile, and vinyl acetate.

9. Process as claimed in claims 6 to 8, wherein the olefin polymer is an ethylene-vinyl acetate copolymer.

## Patentansprüche

1. Expandierbare thermoplastische Polymerisat-Verbundperlen, umfassend ein Olefinpolymerisat, ein Vinylpolymerisat und ein bei Normaltemperatur und Normaldruk gasförmiges oder flüssiges Treibmittel, dadurch gekennzeichnet, daß die Perlen aus einem Kern und einer Haut bestehen, wobei das Gewichtsverhältnis von Kern zu Haut im Bereich von 95:5 bis 30:70 liegt, der Kern aus 60 bis 100 Gewichtsprozent Styrol und/oder Methylmethacrylat und die Haut aus dem Olefin-Polymerisat besteht, das 5 bis 50 Gewichtsprozent eines Vinyl-Polymerisats enthält, und das Treibmittel einen Siedepunkt unterhalb des Erweichungspunktes des Kernmaterials hat.

2. Polymerisatperlen nach Anspruch 1, wobei der Kern 0 bis 40 Gewichtsprozent Acrylnitril, Vinylacetat oder Gemische davon enthält.

3. Polymerisatperlen nach Anspruch 1 oder 2, wobei das Olefin-Polymerisat, das die Haut darstellt, ein Äthylen-Vinylacetat-Copolymerisat ist.

4. Polymerisatperlen nach Anspruch 3, wobei das Äthylen-Vinylacetat-Copolymerisat 15 bis 50 Gewichtsprozent Vinylacetat-Monomereinheiten enthält und einen Schmelzpunkt von 1 bis 100 hat.

5. Polymerisatperlen nach Anspruch 1 bis 4, wobei das Vinylpolymerisat der Haut Polystyrol ist.

6. Verfahren zur Herstellung der Polymerisatperlen nach Anspruch 1, dadurch gekennzeichnet, daß man Körner eines Vinylpolymerisats, ein pulverförmiges Olefinpolymerisat, ein oder mehrere Vinylmonomere, die in das Olefinpolymerisat absorbiert werden können, und ein Vernetzungsmittel in einem ein Dispergiermittel enthaltenden wäßrigen Medium in einem Verhältnis A:B von 95:5 bis 30:70 und in einem Verhältnis von (A+B) zu C im Bereich von 90:10 bis 30:70 suspendiert, wobei A das Gewicht der Körner des Vinylpolymerisats, B das Gewicht des pulverförmigen Olefinpolymerisats und C das Gewicht des oder der Vinylmonomeren ist, und die Vinylmonomeren in Gegenwart eines Initiators polymerisiert, wobei man das Treibmittel dem Dispersionsgemisch während oder nach der Polymerisation zusetzt oder Perlen aus einem das Treibmittel enthaltenden Vinylpolymerisat als Ausgangsmaterial verwendet.

7. Verfahren nach Anspruch 6, wobei man Körner aus einem expandierbaren Polystyrol, die vorher mit einem Treibmittel imprägniert worden sind, als Ausgangsmaterial verwendet.

8. Verfahren nach Anspruch 6 oder 7, wobei eines der Vinylmonomeren Styrol und das andere Methylmethacrylat, Acrylnitril oder Vinylacetat ist.

9. Verfahren nach Anspruch 6 bis 8, wobei das Olefinpolymersat ein Äthylen-Vinylacetat-Copolymerisat ist.

## Revendications

1. Perles expansibles composites en matière polymère thermoplastique, comprenant un polymère oléfinique, un polymère vinylique et un agent moussant qui est gazeux ou liquide aux température et pression ordinaires, caractérisées en ce que les perles sont constituées d'un noyau et d'une pellicule, le rapport en poids entre le noyau et la pellicule étant de l'ordre de 95/5 à 30/70, le noyau étant constitué de 60 à 100 parties en poids de styrène et/ou de méthacrylate de méthyle, la pellicule étant constituée du polymère oléfinique qui contient 5 à 50% en poids d'un polymère vinylique, et en ce que l'agent moussant présente un point d'ébullition inférieur au point de ramollissement de la matière de noyau.

2. Perles en matière polymère suivant la revendication 1, caractérisées en ce que le noyau contient 0 à 40% en poids d'acrylonitrile, d'acétate de vinyle ou de melanages de ces composés.

3. Perles en matière polymère suivant l'une des revendications 1 et 2, caractérisées en ce que le polymère oléfinique qui constitue la pellicule est un copolymère d'éthylène-acétate de vinyle.

4. Perles en matière polymère suivant la revendication 3, caractérisées en ce que le copolymère d'éthylène-acétate de vinyle contient 15 à 50% d'unités monomères d'acétate de vinyle et présente un indice de fusion de 1 à 100.

5. Perles en matière polymère suivant l'une des revendications 1 à 4, caractérisées en ce que le polymère vinylique dans la pellicule est du polystyrène.

6. Procédé de préparation de perles en matière polymère suivant la revendication 1, caractérisé en ce qu'il comprend la mise en suspension, dans un milieu aqueux contenant un agent de dispersion, d'un polymère vinylique en grains, d'un polymère oléfinique en poudre, d'un ou plusieurs monomères vinyliques, capables d'être absorbés dans le polymère oléfinique, et d'un agent de réticulation, dans un rapport A/B de l'ordre de 95/5 à 30/70 et dans un rapport entre (A+B) et C de l'ordre de 90/10 à 30/70, A représentant le poids des grains du polymère vinylique, B le poids d'un polymère oléfinique en poudre et C le poids d'un ou de plusieurs monomères vinyliques, et la polymérisation des polymères vinyliques en présence d'un agent d'amorçage, l'agent moussant étant ajouté au mélange en dispersion pendant ou après la polymérisation, ou des grains du polymère vinylique contenant l'agent moussant étant utilisés comme matière de départ.

7. Procédé suivant la revendication 6, caractérisée en ce que des grains d'un polystyrène expansible précédemment imprégné par un agent moussant sont utilisés comme matière de départ.

8. Procédé suivant l'une des revendications 6 ou 7, caractérisé en ce qu'un des monomères vinyliques est du styrène et en ce que l'autre est choisi parmi le méthacrylate de méthyle, l'acrylonitrile, et l'acétate de vinyle.

9. Procédé suivant l'une des revendications 6 à 8, caractérisé en ce que le polymère oléfinique est un copolymère d'éthylène-acétate de vinyle.